Europäisches Patentamt

European Patent Office

Office européen des brevets

(11) Publication number: **0 144 189**
**B1**

(12) **EUROPEAN PATENT SPECIFICATION**

(45) Date of publication of patent specification: **04.05.88**

(21) Application number: **84308006.0**

(22) Date of filing: **19.11.84**

(51) Int. Cl.⁴: **F 23 L 15/04, F 28 D 7/12**

(54) Recuperator.

(30) Priority: **25.11.83 GB 8331543**

(43) Date of publication of application:
**12.06.85 Bulletin 85/24**

(45) Publication of the grant of the patent:
**04.05.88 Bulletin 88/18**

(84) Designated Contracting States:
**DE NL**

(56) References cited:
**FR-A-1 482 762**
**US-A-1 813 057**
**US-A-2 937 855**
**US-A-3 360 036**
**US-A-3 920 383**
**US-A-4 310 303**

(73) Proprietor: **W.B. Combustion Limited**
**Norton Green Lane Norton Canes**
**Cannock Staffordshire, WS11 3PR (GB)**

(72) Inventor: **Collier, David**
**9411 West Forest Park Drive**
**Hales Corners Milwaukee Wisconsin, 53130 (US)**

(74) Representative: **Stonehouse, Sidney William**
**et al**
**Barker, Brettell & Duncan 138 Hagley Road**
**Edgbaston**
**Birmingham B16 9PW (GB)**

## Description

This invention relates to a recuperator of the kind in which exhaust gases from a fuel-fired burner for heating a furnace are utilised to heat air which may, for example, be supplied to the burner for combustion.

It is known, for example from US—A—3920383, to provide a recuperator for recovering heat from the exhaust gases of a radiant tube burner to heat a supply of air, the exhaust gases and air passing through respective passages defined by co-axial tubes. In US—A—4310303 a plug-in recuperator positioned within the exhaust assembly of a furnace, more particularly at the exhaust leg of a U-shaped radiant tube burner, comprises an outer tube around the exterior of which hot exhaust gases pass and a co-axial inner tube which divides the interior of the outer tube into communicating outer and inner passages through which air is passed to be heated. The air passes firstly along the outer passage in the opposite direction to the exhaust gases, and then along the inner passage in the same direction as the exhaust gases before passing out of the recuperator. The amount of heat which can be transferred from the exhaust gases to the air is limited by the surface area of the separating tube. A substantial amount of useful heat is not recovered and passes to the exhaust outlet.

An increased surface area in contact with the exhaust gases is made available in US—A—2937855 where banks of air tubes are provided. Each bank comprises a plurality of spaced air tubes. The air tubes extend transversely across an exhaust gas passage, and each air tube comprises co-axial outer and inner tubes which provide communicating outer and inner air passages through which air is passed to be heated. The air passes initially along the inner air passages, and then along the outer air passage in the opposite direction. In this arrangement, because the air tubes extend transversely of the direction of flow of the exhaust gases, the exhaust gases are only briefly in heat exchanging contact with the air tubes so that again a substantial amount of useful heat may not be recovered, unless several banks of the air tubes are used together.

The recuperator of US—A—2937855 requires additional structure for the disposal of the exhaust gases.

The present invention seeks to increase the heat recovery from the exhaust gases, and provide a compact structure for the heating of air and the exhausting of exhaust gases from a furnace burner.

The present invention consists in a recuperator comprising an exhaust gas passage through which in use exhaust gases pass from a fuel fired furnace burner, and a plurality of air tubes disposed in laterally spaced relationship in the exhaust gas passage to be heated by exhaust gases in that passage, each air tube being divided internally into communicating outer and inner air passages along which air is passed to be heated in the air tubes, characterised in that the exhaust gas passage is formed at least in part by a tubular member adapted for connecting the recuperator in position for use relative to the burner with which it is to be used and retained to one end of which tubular member is a housing having an exhaust outlet by way of which the exhaust gases leave the exhaust gas passage and containing a first air chamber and a second air chamber which are co-axial with the tubular member, the first air chamber having an air supply inlet by which air to be heated in the recuperator enters into that chamber and the second air chamber receiving air heated in the recuperator and having an outlet for the heated air to leave the recuperator, and further characterised in that the air tubes are supported by the housing and extend from the housing into the exhaust gas passage longitudinally of the tubular member, each air tube having its outer air passage connected to the first air chamber to receive air from that chamber which flows along the outer air passage contra to the direction of flow of exhaust gases passing along the exhaust gas passage to the exhaust outlet so as to be heated in the air tube, and its inner air passage connected to the second air chamber and communicating with the outer air passage remote from the second air chamber for heated air to pass from the outer air passage along the inner air passage to the second air chamber in the direction of the flow of exhaust gases along the exhaust gas passage.

By having the plurality of air tubes extending longitudinally of the exhaust gas passage not only is the surface area in contact with the exhaust gases in the exhaust gas passage appreciably increased but also the gases are in contact with air tubes longer so that more heat can be extracted from the exhaust gases. Furthermore, by passing the air firstly through the outer passages which can be relatively confined the air is heated quickly by its close contact with the air tube surfaces heated by the exhaust gases and the velocity of supply of the heated air from the recuperator can be increased. Accordingly, improved efficiency of heat exchange is possible without a need for banks of the air tubes.

The recuperator may be used in conjunction with a burner of a direct-fired furnace or with a burner in a radiant tube. In either application it may be positioned in an exhaust duct, which may be in a wall of the furnace, leading to an exhaust stack, or it may be in an exhaust stack. Used in combination with a radiant tube it may be detachably connected to the radiant tube or it may be incorporated in the radiant tube as an integral part of the radiant tube. The recuperator may be applied to radiant tubes of various kinds. It may be used with radiant tubes of U, O or W shapes, and with single open ended radiant tubes.

By having the exhaust gas passage formed at least in part by the tubular member which is adapted for connecting the recuperator in position for use, and incorporating the air chambers into the housing retained to one end of the tubular member, which also contains the exhaust outlet, a compact unit is provided which is readily fitted for use. The combining of the recuperator and means for dealing with the removal of the exhaust gases ensures that they are properly related for use, and reduces the installation work required.

It is possible for a sufficiently compact construction of the recuperator to be provided that when the recuperator is installed for use at a furnace it is to a large extent contained within the wall thickness of the furnace. Thus it receives exhaust gases straight from the interior or the environs of the interior of the furnace and its recuperative performance is most efficient.

At least partially around the end of the exhaust gas passage at which the exhaust gases leave the passage, an air passage may be provided from which air passes to the first air chamber for supply to the air tubes. This assists in cooling the exhaust gases before they pass to the exhaust outlet, as well as imparting some heat to the air before it passes to the air tubes. It is advantageous also in cooling the working environment at the area from which the exhaust gases are taken from the furnace with which the recuperator is used.

An embodiment of the invention will now be described, by way of example, with reference to the accompanying drawings in which

Figure 1 is a composite axial section through a recuperator in accordance with the present invention,

Figure 2 is a section on line 2—2 of Figure 1, and

Figure 3 is a composite axial section through a modified form of the recuperator.

In this embodiment the invention is applied to a recuperator which is provided at the exhaust end of a U-shaped radiant tube, heated by a gas-fired burner, the recuperator thus being at the opposite limb of the radiant tube from that in which the burner is located.

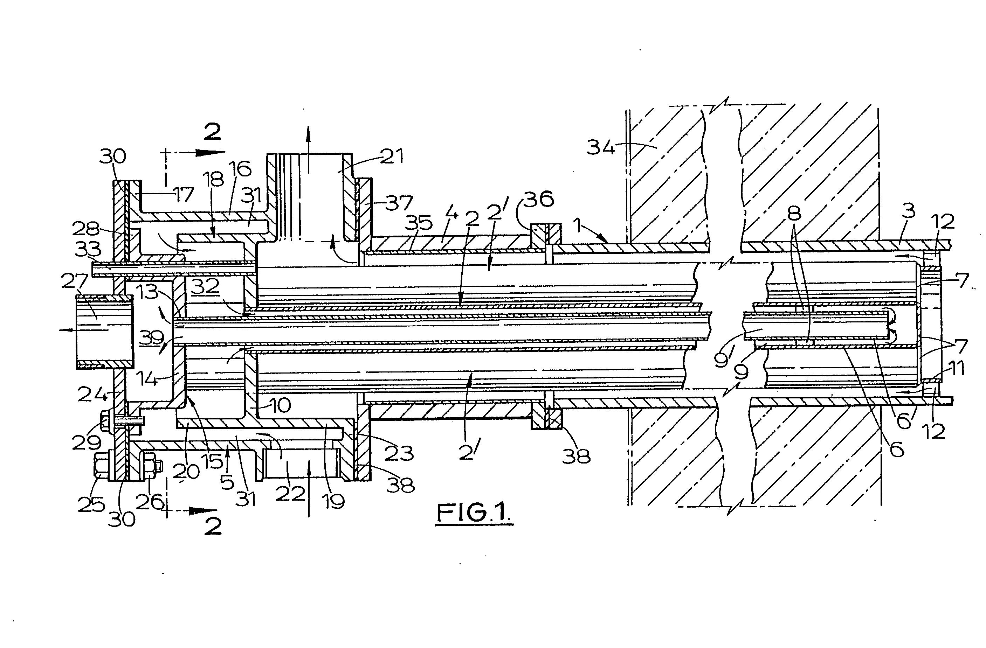

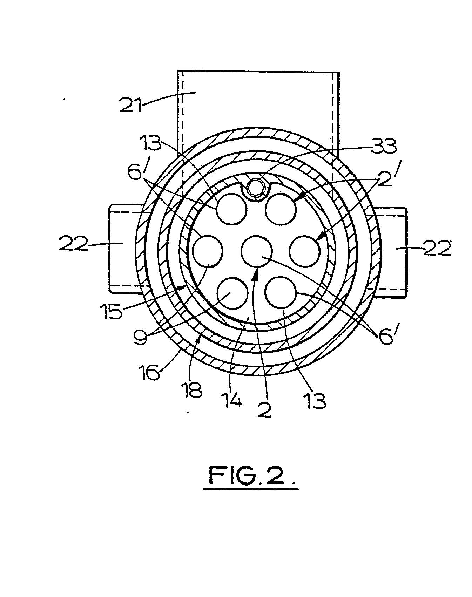

Referring to Figures 1 and 2 of the drawings, the recuperator comprises an exhaust gas tube 1 and a plurality of air tubes 2, 2' located inside and extending longitudinally of the exhaust gas tube 1. The exhaust gas tube 1 is formed partially by an exhaust end portion 3 of the radiant tube, partially by an insulation sleeve 4 which forms a continuation of the exhaust end portion 3 and partially by an exhaust housing 5. The exhaust gas tube 1 and air tubes 2, 2' are all of circular cross-section, and the air tubes are of similar diameters. As illustrated in Figure 2 there are seven of the air tubes 2, 2', one tube 2 extending co-axially with the exhaust gas tube 1 and the other tubes 2' being equi-angularly spaced about the co-axial tube 2. The diameters and positions of the air tubes 2, 2' are such that they are spaced laterally from one another and from the internal surface of the exhaust gas tube. There may be more or fewer than seven of the air tubes, according to the size of the radiant tube and requirements of the recuperator.

Each air tube 2, 2' comprises an outer tube 6 and a co-axial inner tube 6'. An inner end of the outer tube 6 is blanked off by an end plate 7 welded over the end of the tube. External radial fins 8 on the inner tube 6' extend into free fitting contact with the outer tube and centralise the inner tube in the outer tube. The inner tube stops a short distance from the end plate 7. It divides the interior of the air tube into an annular outer air passage 9 defined between the inner tube and the outer tube, and an inner air passage 9' defined by the interior of the inner tube. The two air passages merge at the inner end of the outer tube.

At its outer end the outer tube of each air tube 2, 2' is formed with an external screw-thread by which it is screwed into a complementary screw-threaded hole in a radial wall 10 of the exhaust housing 5 which closes off the outer end of the exhaust gas tube. The radial wall 10 supports the outer tubes 6 in the exhaust gas tube. A short tubular ring 11 tack welded to the end plates 7 of the angularly spaced air tubes 2', and having angularly spaced fins 12 extending radially outwards into free fitting contact with the internal surface of the exhaust end portion 3 of the radiant tube, centralises the air tubes in the exhaust gas tube.

The outer ends of the inner tubes 6' of the air tubes 2, 2' project from the outer ends of the outer tubes 6 through the radial wall 10 of the exhaust housing. Those ends are externally screw-threaded and are screwed into complementary screw-threaded holes 13 in a crown portion 14 of a top-hat shaped partition component 15 located in the exhaust housing.

The exhaust housing 5 comprises a cylindrical body 16 having an external annular flange 17 at an outer end thereof, and spaced inside the body a co-axial cylindrical sleeve 18 across the interior of which, intermediate its ends, is the radial wall 10 which separates the sleeve into axially inner and outer sections 19 and 20 respectively. An exhaust outlet 21 which opens from the interior of the inner section 19 of the sleeve extends radially across the space between the sleeve and the body, through the wall of the body and projects from the exterior of the body. At right angles to the exhaust outlet 21 are two diametrically opposed air inlets 22 which open to the interior of the body and project radially from the exterior of the body. The air inlets 22 are positioned adjacent to the inner section 19 of the sleeve. An annular wall 23 extends between the end of the inner section 19 and the adjacent end of the body and closes off the space between the body and the sleeve at the axially inner end of the exhaust housing. The body, sleeve, radial wall 10, annular wall 23, exhaust outlet 21 and air inlets 22 are formed as integral parts of a single casting. At its outer end, which projects beyond the end of the outer section 20 of the sleeve, the body is closed by a closure plate 24 which is secured by bolts 25 and nuts 26 to the external annular flange 17 of the body.

A tubular air outlet 27 is fixed in a central hole in the closure plate. The top-hat shaped partition component 15 is secured at an annular flange portion 28 to the closure plate 24, by bolts 29, inside the body, co-axially of the sleeve and body. A suitable gasket 30 interposed between the closure plate and the body flange 17 also extends between the closure plate and the flange portion 28 of the partition component. An air exit chamber 39 is defined by the interior of the partition component 15 closed by the closure plate 24. The crown portion 14 of the partition component is of smaller diameter than the interior of the sleeve and just enters into the outer section 20 of the sleeve, the greater part of the component being disposed axially outwardly of the sleeve.

It is the inner section 19 of the sleeve which forms the part of the exhaust gas tube 1 defined by the exhaust housing. The exhaust outlet 21 communicates with the interior of the exhaust gas tube 1 at the inner section 19.

The air inlets 22 communicate by way of the space between the body and the sleeve, which forms an annular air passage 31, with the outer section 20 of the sleeve the interior of which between the radial wall 10 and the crown portion 14 of the partition component forms an air chamber 32. The outer air passages 9 of the air tubes 2, 2' are open to the air chamber 32. The inner air passages 9' open to the interior of the crown portion 14 of the partition component with which the inner end of the air outlet 27 communicates.

A sighting/sample tube 33 extends through the closure plate 24, partition component, and radial wall 10 to the inner section 19 of the sleeve adjacent to the exhaust outlet 21.

The exhaust housing, with partition component and closure plate attached, and the air tubes form a plug-in unit which connects to the exhaust end of the radiant tube. The radiant tube is installed for use in a furnace in the usual manner, with the end portions of the two limbs of its U-shape in the brickwork 34 of a wall of the furnace, as indicated in Figure 1. Outside the brickwork 34, the exhaust end portion 3, which protrudes a short distance from the brickwork, has the insulation sleeve 4 fitted co-axially to it, and the exhaust housing 5 is connected to the insulation sleeve 4 with the inner section 19 of the sleeve 18 of the exhaust housing co-axial with and contiguous with the interior of the insulation sleeve. The insulation sleeve 4 is made of refractory insulating material with a tubular metal lining 35 the internal diameter of which corresponds to that of the exhaust end portion 3. There are external flanges 36, 37 at the ends of the insulation sleeve by which it is connected to the exhaust end portion and exhaust housing. Gaskets 38 are applied at the joints. The air tubes extend through the insulation sleeve and into the exhaust end portion. Their lengths are such that they extend through the brickwork 34 and into the portion of the radiant tube which is inside the furnace.

In the finished installation of the recuperator an air supply duct, not shown, is connected to one or the other of the inlets 22, whichever is most convenient for the connection, the other air inlet being closed off by a plug, the air outlet 27 is connected to a duct, not shown, which takes air from the recuperator to the burner of the radiant tube, and the exhaust outlet 21 is connected to an exhaust stack, not shown.

In use of the radiant tube, exhaust gases from the burner pass along the exhaust gas tube 1 to the exhaust stack and heat the outer tubes 6 of the air tubes 2, 2'. Air from the air inlets 22 passes into the air chamber 32 in the exhaust housing and from there into the air tubes by way of the outer air passages 9. The air passes along the outer air passages 9 in the opposite direction to the flow of the exhaust gases in the exhaust gas tube 1 and is heated by the outer tubes 6. The heated air in the outer air passages 9 in turn imparts heat to the inner tubes 6' which are also heated by radiant heat from the outer tubes. From the outer air passages the air passes into the inner air passages 9' where it continues to be heated before leaving the air tubes in the crown portion 14 of the partition component 15 and entering the air exit chamber 39. It then passes out of the air exit chamber 39 through the air outlet 27 to the duct which takes the heated air to the burner for combustion.

It has been found by tests that for most installations it is desirable for the air tubes to extend about 3 inches (7.62 cm) beyond the brickwork 33 into the portion of the radiant tube inside the furnace. If they extend further beyond the brickwork the heat dissipation from the radiant tube to the furnace can be reduced, and if they extend for a shorter distance the effective length of the recuperator is reduced and hence the heat gain by the air is reduced. However, in some installations where there is a large difference, in excess of 150°C, between the exhaust gas temperature and the furnace temperature the air tubes may project up to about 6 inches (15.24 cm) beyond the brickwork without significant loss of heat to the furnace.

By arranging that the air entering the exhaust housing from the air inlets 22 passes along the annular air passage 31 around the sleeve 18 before entering the air chamber 32, the air helps to cool the exposed part of the recuperator outside the furnace, and thereby improve the working environment around the furnace. The air in the annular air passage 31 will pick up heat from the sleeve 18 which is heated by the exhaust gases in the inner section 21, so that there is further heat gain by the air in the recuperator.

Typically as applied to a radiant tube having an inside diameter of 5 or 6 inches (12.70 or 15.24 cm) the recuperator has seven air tubes, the outer tubes being of 1.5 inch (3.81 cm) outside diameter and the inner tubes of 1 inch (2.54 cm) outside diameter.

The recuperator may be applied to radiant tubes having an inside diameter as small as 3

inches (7.62 cm). In such an application the recuperator typically has four air tubes the outer tubes of which are of 1.125 inch (2.86 cm) outside diameter and the inner tubes are of 0.625 inch (1.59 cm) outside diameter. For a radiant tube having an inner diameter of 4 inches (10.16 cm) the recuperator may have seven air tubes with outer and inner tubes of the same outside diameters as for the 3 inch (7.62 cm) inside diameter radiant tubes.

Tests carried out with a recuperator in accordance with the embodiment described and a known recuperator of similar effective length having a single air passage and operating in similar conditions with the same type of radiant tube, have shown a substantial improvement in the efficiency of the former over the latter. For example, using recuperators having effective lengths of 30 inch (76.20 cm) with the seven air tubes of the described recuperator having outer tubes of 1.5 inch (3.81 cm) outside diameter and inner tubes of 1.0 inch (2.54 cm) outside diameter, and the recuperators respectively being fitted in the exhaust leg of a U-shaped radiant tube having an inside diameter of 6.125 inch (15.56 cm), at a flue gas temperature of 950°C for both recuperators the temperature of air leaving the known recuperator was 448°C and the temperature of the air leaving the described recuperator was 522°C, an improvement of approximately 17%. Approximately 150% more surface area was heated by the exhaust gases and imparted heat to the air in the described recuperator than in the known recuperator. In these tests the recuperators pre-heated air for combustion. It was noted that the pressure drop in the heated air supplied from the described recuperator was lower than that from the known recuperator. Because of the reduced pressure drop the recuperator may have wider application than the known recuperator; it may be used in conjunction with negative pressure systems or blown systems with high air flow.

It will be appreciated that the improved preheating of air for combustion can significantly reduce the amount of fuel required for a given furnace, and the consequent saving on fuel costs can reduce appreciably the period for recovering the cost of the recuperator and its installation.

As regards manufacture, the recuperator described has the advantage that the outer and inner tubes of the air tubes can be readily assembled with the exhaust housing because they screw into engagement with the radial wall 10 and the crown portion 14 of the partition component 15 respectively. Welding is not required, therefore, in the assembling, which reduces costs. Such welding as is required is confined to the securing of the end plates 7 to the ends of the outer tubes and to attaching the ring 11 to the end plates of the angularly spaced air tubes. The screwed connections also enable the tubes to be readily replaced, if necessary. With just a few tube diameter sizes recuperators as described may be made for fitting to radiant tubes of a range of sizes.

It will be appreciated that by providing the exhaust housing and air tubes as a plug-in unit, installation is facilitated. In some installations the exhaust housing may be connected directly to the end of the radiant tube without the insulation sleeve 4.

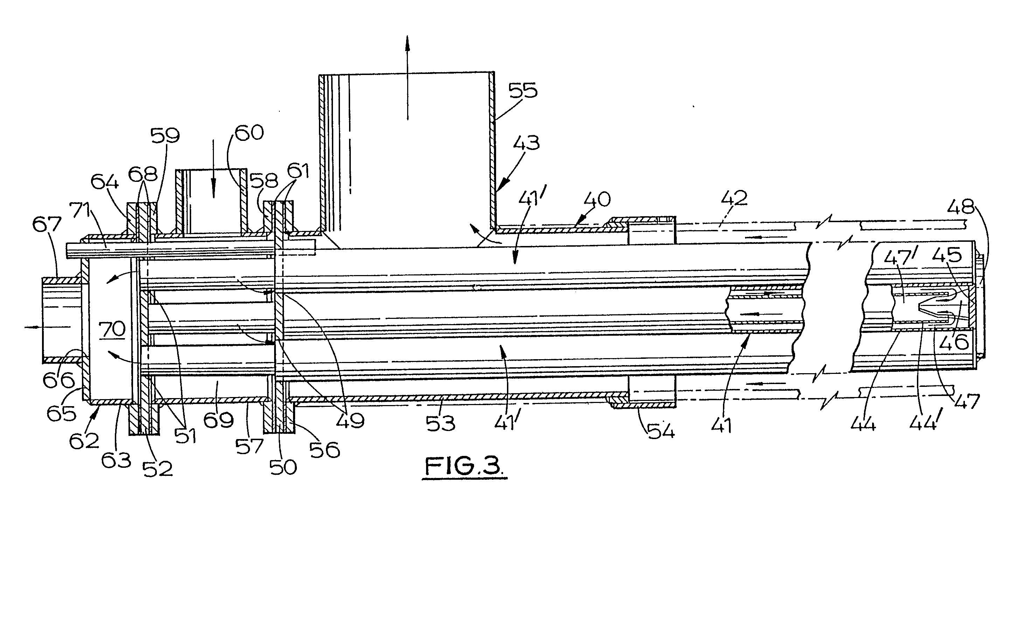

The modified form of recuperator shown in Figure 3 of the accompanying drawings will now be described. This modified form largely avoids the use of cast components.

As before, the recuperator comprises an exhaust gas tube 40 longitudinally inside which are located several air tubes 41, 41'. One air tube 41 is co-axial with the exhaust gas tube 40 and the other tubes 41' are equi-angularly spaced about, and extend parallel to, that tube out of contact with that tube and one another and with the exhaust gas tube.

The exhaust gas tube 40 is formed partially by an exhaust end portion 42 of a radiant tube and partially by an exhaust housing 43.

Each air tube 41, 41' comprises an outer tube 44 and a co-axial inner tube 44'. At its inner end the outer tube 44 is blanked off by a closure fitting 45 made as a casting which is welded in the end of the tube and has an integral, three-finned locator 46 which engages in, without being welded or otherwise fixed to, the inner end of the inner tube 44' to hold that tube centrally in the outer tube. The inner tube 44' divides the interior of the air tube 41, 41' into an annular outer air passage 47 and an inner air passage 47' with the two passages being allowed by the locator 46 to merge at the inner end of the outer tube. The locator is designed to cause a minimal pressure drop in air passing from the one passage to the other.

A ring 48 tack welded to the closure fittings 45 has radially outwardly extending fins, not shown, which contact the internal surface of the exhaust gas tube 40 (which here is defined by the exhaust end portion 42 of the radiant tube) to centralise the air tubes 41, 41' in the exhaust gas tube. The outer ends of the outer tubes 44 of the air tubes are tack welded in respective complementary plain-bore holes 49 in a circular first supporting plate 50 which closes off the outer end of the exhaust gas tube 40.

The outer ends of the inner tubes 44' of the air tubes 41, 41' project from the outer ends of the tubes 44 behind the first supporting plate 50 and are tack welded in respective plain bore holes 51 in a circular second supporting plate 52.

The exhaust housing 43 is of a fabricated construction. It comprises a body tube 53 which forms part of the exhaust gas tube 40 and which has a collar 54 welded around its forward end which connects over the exhaust end portion 42 of the radiant tube, a radial tubular exhaust outlet 55 welded to it towards its rearward end, and an external annular flange piece 56 welded around its rearward end. Co-axially behind the body tube 53 is a continuation tube 57 which has external front and rear annular flange pieces 58, 59 welded respectively around its forward and rearward ends, and a radial tubular air inlet 60 welded to it centrally of its length. The body tube 53 and continuation tube 57 are connected, with the first supporting plate 50 interposed between them, by bolts, not shown, passed through registering holes in the flange piece 56 of the body tube, the first supporting plate and the front flange piece 58 of the continuation tube and secured by retaining nuts, not shown. Gaskets 61 are fitted at either side of the first supporting plate 50. Behind the continuation tube 57 is a closure cap 62 which comprises a short tube 63 co-axial with the continuation tube, an external annular flange piece 64 welded around the forward end of the tube 63, and a crown plate 65 welded over the rearward end of the tube having a central aperture 66 opening into the interior of the tubular air outlet 67 welded to the back of the crown plate 65. The closure cap 62 and continuation tube 57 are connected, with the second supporting plate 52 interposed between them, by bolts, not shown, passed through registering holes in the flange piece 64 of the closure cap, the second supporting plate and the rear flange piece 59 of the continuation tube and secured by retaining nuts, not shown. Again gaskets 68 are fitted at either side of the second supporting plate.

The exhaust outlet 55 communicates with the interior of the exhaust gas tube 40 at the body tube 53. The air inlet 60 opens into an air entry chamber 69 defined by the interior of the continuation tube between the first and second supporting plates. From this air entry chamber 69 open the outer air passages 47 of the air tubes 41, 41'. The interior of the closure cap 62 defines an air exit chamber 70 with which the inner air passages 47' of the air tube communicate and from which the air outlet 67 opens.

A sighting/sample tube 71 extends through the crown plate 65 of the closure cap, and through the second and first supporting plates into the body tube 53 where its forward end is disposed just rearwardly of the exhaust outlet 55.

As before, the complete exhaust housing 43 and the air tubes 41, 41' form a plug-in unit which detachably connects to the exhaust end portion 42 of the radiant tube. The radiant tube, for example of U-shape, is installed for use in a furnace with its burner and exhaust end portions in the brickwork of a wall of the furnace, not shown, the exhaust end portion 42 protruding a short distance out from the brickwork for the body tube 53 to be connected to it. The air inlet 60 connects to an air supply duct, the air outlet 67 connects to a duct which takes air from the recuperator to the burner of the radiant tube, and the exhaust outlet 55 connects to an exhaust stack.

It will be seen that in this modified form of recuperator incoming air to be heated passes along the outer air passages 47 of the air tubes 41, 41' in the opposite direction to which exhaust gases from the burner pass along the exhaust gas tube 40, and heated outgoing air passes along the inner passages 47' in the same direction as the exhaust gases.

As mentioned the outer tubes 44 and inner tubes 44' are tack welded respectively to the first and second supporting plates 50, 52. There may be just three, or possibly only two, angularly spaced weld spots attaching each tube to the respective plate so that the tube may be readily detached from the plate for replacement.

**Claims**

1. A recuperator comprising an exhaust gas passage through which in use exhaust gases pass from a fuel-fired furnace burner, and a plurality of air tubes disposed in laterally spaced relationship in the exhaust gas passage to be heated by exhaust gases in that passage, each air tube being divided internally into communicating outer and inner air passages along which air is passed to be heated in the air tubes, characterised in that the exhaust gas passage (1, 40) is formed at least in part by a tubular member (4, 53) adapted for connecting the recuperator in position for use relative to the burner with which it is to be used and retained to one end of which tubular member (4, 53) is a housing (5, 43) having an exhaust outlet (21, 55) by way of which the exhaust gases leave the exhaust gas passage (1, 40) and containing a first air chamber (32, 69) and a second air chamber (39, 70) which are co-axial with the tubular member (4, 53), the first air chamber (32, 69) having an air supply inlet (22, 60) by which air to be heated in the recuperator enters into that chamber and the second air chamber (39, 70) receiving air heated in the recuperator and having an outlet (27, 67) for the heated air to leave the recuperator, and further characterised in that the air tubes (2, 2', 41, 41') are supported by the housing (5, 43) and extend from the housing into the exhaust gas passage (1, 40) longitudinally of the tubular member (4, 53), each air tube (2, 2', 41, 41') having its outer air passage (9, 47) connected to the first air chamber (32, 69) to receive air from that chamber which flows along the outer air passage (9, 47) contra to the direction of flow of exhaust gases passing along the exhaust gas passage (1, 40) to the exhaust outlet (21, 55) so as to be heated in the air tube (2, 2', 41, 41'), and its inner air passage (9', 47') connected to the second air chamber (39, 70) for heated air to pass from the outer air passage (9, 47) along the inner air passage (9', 47') to the second air chamber (39, 70) in the direction of the flow of exhaust gases along the exhaust gas passage (1, 40).

2. A recuperator according to claim 1 characterised in that one air tube (2, 41) extends centrally along the tubular member (4, 53) and there is a plurality of air tubes (2', 41') spaced in the tubular member (4, 53) angularly about the central air tube (2, 41).

3. A recuperator according to claim 1 or claim 2 characterised in that an air passage (31) extends at least partially around an outer end of the exhaust gas passage (1) by way of which air passage (31) air passes to the first air chamber (32) from the air supply inlet (22), the air in the air passage (31) thereby having a cooling effect on exhaust gases in the exhaust gas passage (1) before the gases leave that passage and having heat imparted to it from the exhaust gases before the air enters the first air chamber (32) to pass to the air tubes (2, 2').

4. A recuperator according to any preceding claim characterised in that the first and second air chambers (32, 39, 69, 70) each have a wall (10, 50, 14, 52) in which are holes (49, 51) through which the air tubes (2, 2', 41, 41') open to the chamber (32, 39, 69, 70) and at which the air tubes (2, 2', 41, 41') are detachably secured to the wall (10, 50, 14, 52).

5. The combination of a radiant tube and a recuperator in which the radiant tube has a fuel-fired burner and an exhaust end at which is the recuperator, and the recuperator comprises an exhaust gas passage through which exhaust gases pass from the radiant tube and air passage means disposed in the exhaust gas passage through which air is passed to be heated therein by the exhaust gases passing through the exhaust gas passage, characterised in that the recuperator is in accordance with the recuperator as claimed in any of claims 1 to 4, the tubular member (4, 53) being connected to the exhaust end (3, 42) of the radiant tube.

6. A furnace including a fuel-fired burner, an exhaust duct by way of which exhaust gases from the burner leave the furnace, and a recuperator at the exhaust duct which comprises an exhaust gas passage through which exhaust gases pass from the exhaust duct and air passage means disposed in the exhaust gas passage through which air is passed and to which heat is imparted to heat the air therein from exhaust gases passing through the exhaust gas passage, characterised in that the recuperator is in accordance with the recuperator as claimed in any of claims 1 to 4, the tubular member (4, 53) being connected to the exhaust duct.

7. A furnace according to claim 6 characterised in that the exhaust duct is in a wall (34) of the furnace and the air tubes (2, 2', 41, 41') of the recuperator are contained substantially within the thickness of the wall (34).

**Patentansprüche**

1. Rekuperator mit einer Abgasführung, durch die während des Betriebes Abgase aus einem mit Brennstoff befeuerten Brenner eines Industrieofens hindurchströmen, und mit einer Vielzahl von Luftleitrohren, die mit seitlichem Abstand in der Abgasführung angeordnet sind, um durch die Abgase in dieser Führung aufgeheizt zu werden, wobei jedes Luftleitrohr im Inneren in kommunizierende äußere und innere Luftführungen unterteilt ist, in denen Luft zum Erhitzen in den Luftleitrohren entlangströmt, dadurch gekennzeichnet, daß die Abgasführung (1, 40) zumindest teilweise durch ein rohrförmiges Teil (4, 53) gebildet ist, durch das der Rekuperator in der Betriebsstellung mit dem Brenner verbunden ist, mit dem er zusammenarbeiten soll und daß an einem Ende des rohrförmigen Teils (4, 53) ein Gehäuse (5, 43) befestigt ist, das einen Abgasauslaß (21, 55) aufweist, durch den die Abgase die Abgasführung (1, 40) verlassen, und das eine erste Luftkammer (32, 69) sowie eine zweite Luftkammer (39, 70) enthält, die zu dem rohrförmigen Teil (4, 53) koaxial angeordnet sind, wobei die erste Luftkammer (32, 69) einen Einlaß (22, 60) für die Luftzufuhr aufweist, durch den im Rekuperator aufzuheizende Luft in diese Kammer eintritt, und wobei die zweite Luftkammer (39, 70) die im Rekuperator aufgeheizte Luft aufnimmt und einen Auslaß (27, 67) für die aufgeheizte Luft zum Verlassen des Rekuperators aufweist, und daß die Luftleitrohre (2, 2', 41, 41') durch das Gehäuse (5, 43) getragen werden und sich von dem Gehäuse in die Abgasführung (1, 40) längs des rohrförmigen Teils (4, 53) erstrecken, wobei in jedem Luftleitrohr (2, 2', 41, 41') die äußere Luftführung (9, 47) mit der ersten Luftkammer (32, 69) verbunden ist, um aus dieser Kammer Luft zu erhalten, die entlang der äußeren Luftführung (9, 47) entgegengesetzt zu der Strömungsrichtung der Abgase fließt, die entlang der Abgasführung (1, 40) zu dem Abgasauslaß (21, 55) strömen, so daß sie in dem Luftleitrohr (2, 2', 41, 41') aufgeheizt wird, und wobei die innere Luftführung (9', 47') mit der zweiten Luftkammer (39, 70) verbunden ist, damit aufgeheizte Luft von der äußeren Luftführung (9, 47) entlang der inneren Luftführung (9', 47') in Strömungsrichtung der Abgase entlang der Abgasführung (1, 40) zu der zweiten Luftkammer (39, 70) strömt.

2. Rekuperator nach Anspruch 1, dadurch gekennzeichnet, daß ein Luftleitrohr (2, 41) sich mittig entlang des rohrförmigen Teils (4, 53) erstreckt, und daß eine Vielzahl von Luftleitrohren (2', 41') in dem rohrförmigen Teil (4, 53) um das mittige Luftleitrohr (2, 41) mit Winkelabstand angeordnet ist.

3. Rekuperator nach Anspruch 1 oder 2, dadurch gekennzeichnet, daß sich eine Luftführung (31) mindestens teilweise um ein äußeres Ende der Abgasführung (1) herum erstreckt, wobei durch die Luftführung (31) Luft von dem Einlaß (22) für die Luftzufuhr in die erste Luftkammer (32) strömt, und wodurch die Luft in der Luftführung (31) einen Kühleffekt auf die Abgase in der Abgasführung (1) ausübt, bevor die Gase diese Führung verlassen, und wobei von den Abgasen Wärme an die Luft abgegeben wird, bevor sie in die erste Luftkammer (32) eintritt, um zu den Luftleitrohren (2, 2') zu strömen.

4. Rekuperator nach einem der vorhergehenden Ansprüche, dadurch gekennzeichnet, daß die erste und die zweite Luftkammer (32, 39, 69, 70) jeweils eine Wand (10, 50, 14, 52) aufweisen, in der Löcher (49, 51) sind, durch die die Luftleitrohre (2, 2', 41, 41') sich in die Kammern (32, 39, 69, 70) öffnen und an denen die Luftleitrohre (2, 2', 41, 41') abtrennbar an den Wänden (10, 50, 14, 52) befestigt sind.

5. Kombination eines Flammrohres mit einem Rekuperator, bei der das Flammrohr einen mit Brennstoff befeuerten Brenner und ein Abgasende aufweist, an dem sich der Rekuperator befindet, und bei der der Rekuperator eine Abgasführung, durch die Abgase von dem Flammrohr strömen, und Luftführungseinrichtungen enthält, die in der Abgasführung angeordnet sind, durch die Luft strömt, um darin durch die Abgase, die durch die Abgasführung strömen, aufgeheizt zu werden, dadurch gekennzeichnet, daß der Rekuperator ein Rekuperator nach einem der Ansprüche 1 bis 4 ist, wobei das rohrförmige Teil (4, 53) mit dem Abgasende (3, 42) des Flammrohres verbunden ist.

6. Brennofen mit einem mit Brennstoff befeuerten Brenner, einer Abgasleitung, durch die Abgase vom Brenner den Ofen verlassen, und einem Rekuperator an der Abgasleitung, der eine Abgasführung, durch die Abgase von der Abgasleitung strömen, und Luftführungseinrichtungen enthält, die in der Abgasführung angeordnet sind, durch die Luft strömt und denen Wärme zugeführt wird, um die Luft darin durch die durch die Abgasführung strömenden Abgase zu erwärmen, dadurch gekennzeichnet, daß der Rekuperator ein Rekuperator nach einem der Ansprüche 1 bis 4 ist, wobei das rohrförmige Teil (4, 53) mit der Abgasleitung verbunden ist.

7. Brennofen nach Anspruch 6, dadurch gekennzeichnet, daß die Abgasleitung in einer Wand (34) des Ofens angeordnet ist und daß die Luftleitrohre (2, 2', 41, 41') des Rekuperators sich im wesentlichen innerhalb der Wanddicke (34) erstrecken.

## Revendications

1. Récupérateur, comprenant un passage pour gaz d'échappement, que les gaz d'échappement empruntent en service lorsqu'ils quittent un brûleur de four brûlant un combustible, et plusieurs tubes à air disposés en relation latéralement espacée dans le passage des gaz d'échappement pour être chauffés par les gaz d'échappement circulant dans ce passage, chaque tube à air étant divisé intérieurement en des passages internes et externes d'air qui communiquent et le long desquels l'air passe pour être chauffé dans les tubes à air, récupérateur caractérisé en ce que le passage (1, 40) pour gaz d'échappement est formé, au moins en partie, par un élément tubulaire (4, 53) destiné à relier le récupérateur, en position pour servir, par rapport au brûleur avec lequel il doit servir, et en ce qu'il y a, retenue à une extrémité de cet élément tubulair (4, 53), une enveloppe (5, 43) comportant une sortie (21, 55) d'échappement par laquelle les gaz d'échappement quittent le passage (1, 40) et contenant une première chambre (32, 69) à air et une seconde chambre (39, 70) à air qui sont coaxiales avec l'élément tubulaire (4, 53), la première chambre (32, 69) à air ayant une entrée (22, 60) d'admission d'air par laquelle l'air à chauffer dans le récupérateur entre dans cette chambre et la seconde chambre (39, 70) à air recevant l'air chauffé dans le récupérateur et comportant une sortie (27, 67) permettant à l'air chauffé de quitter le récupérateur, lequel est encore caractérisé en ce que les tubes (2, 2'; 41, 41') à air sont supportés par l'enveloppe (5, 43) et s'étendent de l'enveloppe dans le passage (1, 40) le long de l'élément tubulaire (4, 53), chaque tube (2, 2'; 41, 41') à air ayant son passage (9, 47) d'air extérieur connecté à la première chambre (32, 69) à air afin de recevoir de l'air de cette chambre, lequel s'écoule le long du passage (9, 47) d'air extérieur à contre-courant de la direction d'écoulement des gaz d'échappement empruntant le passage (1, 40) des gas d'échappement pour parvenir à la sortie (21, 55) d'échappement, de façon à être chauffé dans le tube (2, 2', 41, 41') à air, et son passage (9', 47') d'air intérieur connecté à la seconde chambre (39, 70) à air pour que l'air chauffé passe du passage (9, 47) d'air extérieur, le long du passage (9', 47') d'air intérieur vers la seconde chambre (39, 70) à air dans la direction de l'écoulement des gaz d'échappement le long du passage (1, 40) des gaz d'échappement.

2. Récupérateur selon la revendication 1, caractérisé en ce qu'un tube (2, 41) à air s'étend centralement le long de l'élément tubulaire (4, 53) et en ce qu'il existe plusieurs tubes (2', 41') à air espacés dans l'élément tubulaire (4, 53) angulairement autour du tube (2, 41) à air central.

3. Récupérateur selon la revendication 1 ou la revendication 2, caractérisé en ce qu'un passage (31) d'air s'étend au moins partiellement autour d'une extrémité extérieure du passage (1) de gaz d'échappement, ce passage (31) permettant à l'air provenant de l'entrée (22) d'admission d'air de passer vers la première chambre (32) à air, l'air circulant dans le passage (31) à air exerçant ainsi un effet de refroidissement sur les gaz d'échappement circulant dans le passage (1) des gaz d'échappement avant que les gaz ne quittent ce passage et recevant de la chaleur en provenance des gaz d'échappement avant que l'air n'entre dans la première chambre (32) pour passer dans les tubes (2, 2') à air.

4. Récupérateur selon l'une quelconque des revendications précédentes, caractérisé en ce que les première et seconde chambres (32, 39; 69, 70) à air comportent chacune une paroi (10, 50, 14, 52) percée de trous (49, 51) par lesquels les tubes (2, 2'; 41, 41') à air débouchent dans la chambre (32, 39; 69, 70) et auxquels les tubes (2, 2'; 41, 41') à air sont fixés amoviblement à la paroi (10, 50; 14, 52).

5. Combinaison d'un tube radiant et d'un récupérateur, dans laquelle le tube radiant comporte un brûleur brûlant du combustible et une extrémité d'échappement à laquelle se trouve le récupérateur, et le récupérateur comprend un passage pour gaz d'échappement, que les gaz d'échappement empruntent pour sortir du tube radiant et des passages d'air disposés dans le passage des gaz d'échappement et que l'air emprunte pour être chauffé par les gaz d'échappement empruntant le passage des gaz d'échappement, combinaison caractérisée en ce que le récupérateur correspond au récupérateur tel que revendiqué dans l'une quelconque des revendications 1 à 4, l'élément tubulaire (4, 53) étant connecté à l'extrémité (3, 42) d'échappement du tube radiant.

6. Four comprenant un brûleur brûlant du combustible, un conduit d'échappement permettant aux gaz d'échappement du brûleur de quitter le four, et un récupérateur dont le conduit d'échappement comprend un passage pour gaz d'échappement que les gaz d'échappement empruntent pour quitter le conduit d'échappement et des passages d'air disposés dans le passage de gaz d'échappement, par lesquels passe l'air et auxquels de la chaleur est fournie pour chauffer l'air contenu, cette chaleur provenant des gaz d'échappement empruntant le passage pour gaz d'échappement, four caractérisé en ce que le

récupérateur correspond au récupérateur tel que revendiqué dans l'une quelconque des revendications 1 à 4, l'élément tubulaire (4, 53) étant connecté au conduit d'échappement.

7. Four selon la revendication 6, caractérisé en ce que le conduit d'échappement se trouve dans une paroi (34) du four et en ce que les tubes (2, 2'; 41, 41') à air du récupérateur sont contenus sensiblement au sein de l'épaisseur de la paroi (34).

FIG.1.

0 144 189

FIG.2.

FIG.3.

0 144 189